# EUROPÄISCHE PATENTSCHRIFT

(11) **EP 2 146 062 B1**
(45) Veröffentlichungstag und Bekanntmachung des Hinweises auf die Patenterteilung: **25.02.2015**
(21) Anmeldenummer: 09007954.2
(22) Anmeldetag: 18.06.2009
(51) Int. Cl.: F01N 3/031, F01N 3/021, F01N 3/022

(54) **Partikelfilter für Diesel- und Otto-Motoren**
Particulate filter for diesel and petrol engines
Filtre à particules pour moteurs diesel et Otto

(30) Priorität: 19.07.2008 DE 102008033842
(43) Veröffentlichungstag der Anmeldung: 20.01.2010
(73) Patentinhaber: Karl-Heinz Grywotz Automobiltechnik GmbH, 45966 Gladbeck (DE)
(72) Erfinder: Karl-Heinz Grywotz, 45966 Gladbeck (DE)
(74) Vertreter: Lelgemann, Karl-Heinz

(56) Entgegenhaltungen:
- EP-A1- 1 470 852
- EP-A2- 0 442 318
- EP-A2- 0 472 008
- US-A- 5 809 777

## Beschreibung

Die Erfindung bezieht sich auf einen Partikelfilter für Diesel- und Otto-Motoren nach dem Oberbegriff des Patentanspruchs 1.

Ein derartiger Partikelfilter dient dazu, beim Verbrennungsprozess entstandene Partikel aus dem Abgasstrom der jeweiligen Brennkraftmaschine abzuscheiden, so dass an der Auslassseite des Partikelfilters bzw. der Abgasanlage des mit dem Diesel- oder Otto-Motor ausgerüsteten Fahrzeugs der Abgasstrom partikelfrei oder nahezu partikelfrei ist.

Aus der EP 1 470 852 A1 ist ein Partikelfilter bekannt, dessen Filtereinheit als Wabenstruktur aus über- und nebeneinander angeordneten Strömungskanälen ausgebildet ist. Einander benachbarte Strömungskanäle sind wechselweise an der einen oder der anderen Stirnseite der Filtereinheit offen bzw. mittels eines Stopfens geschlossen gestaltet. Die mittels Stopfen geschlossenen Strömungskanäle erweitern sich an der Stirnseite der wabenförmigen Filtereinheit, an der sich die dort offenen Strömungskanäle verengen bzw. verjüngen.

Aus der EP 0 472 008 A2 ist ein Partikelfilter für Diesel- und/oder Otto-Motoren bekannt, der bereits eine Filtereinheit hat, die in einem Gehäuse angeordnet ist. Zur Filtereinheit gehören eine Vielzahl metallischer Filterrohre, die parallel zueinander angeordnet, an ihrer der Einlassseite des Partikelfilters zugeordneten Stirnseite geschlossen und an ihrer der Auslassseite des Partikelfilters zugeordneten Stirnseite offen sind. Bei diesem bekannten Partikelfilter können zwei unterschiedliche Typen von Filterrohren verwendet werden. Einerseits sind dort die vorstehend bereits erwähnten Filterrohre einsetzbar, die an ihren der Einlassseite des Partikelfilters zugeordneten Stirnseiten geschlossen sind, andererseits sind dort Filterrohre einsetzbar, die an ihren der Einlassseite des Partikelfilters zugeordneten Stirnseiten offen gestaltet sind. Die an ihren der Einlassseite des Partikelfilters zugeordneten Stirnseiten geschlossenen Filterrohre des bekannten Partikelfilters weisen über ihre gesamte Axialerstreckung denselben Durchmesser auf. Der Eintritt des zu filternden Fluids in den Zwischenraum zwischen diesen Filterrohren wird bewerkstelligt, indem der Fluidstrom durch Öffnungen in einer Halteplatte in Richtung zur Auslassseite des Partikelfilters strömt, wobei diese Halteplatte offensichtlich dazu dient, die Filterrohre an ihren der Einlassseite des Partikelfilters zugeordneten Endabschnitten zu halten.

Ausgehend von dem vorstehend geschilderten Stand der Technik liegt der Erfindung die Aufgabe zugrunde, einen Partikelfilter für Diesel- und Otto-Motoren zur Verfügung zu stellen, bei dem der zu filternde Fluidstrom den Partikelfilter störungsfreier durchströmen kann.

Diese Aufgabe wird erfindungsgemäß durch einen Partikelfilter gelöst, der neben den Merkmalen des Oberbegriffs des Patentanspruchs 1 auch die des kennzeichnenden Teils desselben aufweist. Erfindungsgemäß wird im Bereich des einlassseitigen Endabschnitts der Filtereinheit eine allmähliche Anpassung des für den Abgasstrom zur Verfügung stehenden Strömungsquerschnitts erreicht. Der Übergang zu demjenigen Abschnitt der Filtereinheit, in dem als Strömungsquerschnitt nur noch der Zwischenraum zwischen den Außenflächen der Filterrohre zur Verfügung steht, kann so erheblich verbessert werden. Insgesamt ist durch die Vergleichmäßigung der Strömungsverhältnisse innerhalb der Filtereinheit ein höherer Wirkungsgrad des Partikelfilters erreichbar.

Da der Abgasstrom durch die Filterrohre zur Auslassseite des Partikelfilters gelangt, wird sichergestellt, dass der Abgasstrom an der Auslassseite des Partikelfilters weitestgehend partikelfrei ist. Die an den Filterrohren abgeschiedenen Partikel werden aufgrund der Temperaturverhältnisse im Bereich des in die Abgasanlage integrierten Partikelfilters kontinuierlich abverbrannt, so dass der Filterbetrieb dauerhaft gewährleistet werden kann.

Bei dem erfindungsgemäßen Partikelfilter handelt es sich um ein quasi geschlossenes System, bei dem der gesamte Abgasstrom immer durch die Filterrohre geführt wird, so dass mit großer Sicherheit der Durchtritt von Partikeln durch die Abgasanlage des mit dem Diesel- oder Otto-Motor ausgerüsteten Kraftfahrzeugs verhindert werden kann.

Bei der Ausgestaltung gemäß Patentanspruch 2 gelangen trotz des Bypassrohrs große Teile des Abgasstroms durch die Filterrohre zur Auslassseite des Partikelfilters. Mittels des als Bypassventil fungierenden Bypassrohrs wird selbst für den Fall, dass bei bestimmten extremen Betriebsbedingungen bei bestimmten, insbesondere älteren Diesel- und Otto-Motoren Zusetzungen der Filtereinheit auftreten, der Betrieb der Abgasanlage aufrecht erhalten werden kann, da dann der Abgasstrom durch das - wie vorstehend bereits erwähnt - als Bypassventil fungierende Bypassrohr strömen kann.

Gemäß Patentanspruch 3 können die Filterrohre eine unter Berücksichtigung des zur Verfügung stehenden Raumangebots möglichst große Außenfläche aufweisen.

Gemäß Patentanspruch 4 lassen sich diese Außenflächenmaße weiter erhöhen.

Um mit einem möglichst geringen technisch-konstruktiven Aufwand zu einer kompakten Ausgestaltung und fixierten Anordnung der Filterrohre bzw. des Bypassrohrs zu gelangen, ist die Weiterbildung gemäß Patentanspruch 5 vorteilhaft. Hierdurch lassen sich die Rohre der Filtereinheit zueinander fixieren, wobei die Abstände zwischen den Rohren genau eingehalten werden können.

Um im Bereich des einlassseitigen Endabschnitts der Filtereinheit eine allmähliche Anpassung des für den Abgasstrom zur Verfügung stehenden Strömungsquerschnitts sicherzustellen, wird die Ausgestaltung gemäß Patentanspruch 6 vorgeschlagen. Der Übergang zu demjenigen Abschnitt der Filtereinheit, in dem als Strömungsquerschnitt nur noch der Zwischenraum zwischen den Außenflächen der Rohre zur Verfügung steht, kann so verbessert werden.

Vorteilhaft ist der Partikelfilter gemäß Patentanspruch 7 ausgebildet.

Gemäß Patentanspruch 8 kann entsprechend dem hinsichtlich der Einbaumaße bestehenden Anforderungsprofil die Filtereinheit quasi beliebig gestaltet werden.

Um dauerhaft eine möglichst hohe Abscheiderate in der Filtereinheit zu gewährleisten, ist der Partikelfilter zweckmäßigerweise gemäß Patentanspruch 9 ausgestaltet. Im hochtemperaturfesten porösen Metallmantelfilter findet die Abscheidung der Partikel aus dem Abgasstrom statt, wobei dort auch die kontinuierlich erfolgende Verbrennung abgeschiedener Partikel realisiert ist. Durch den den hochtemperaturfesten porösen Metallmantelfilter halternden und stabilisierenden Filterträger kann der Abgasstrom ungehindert in den Innenraum des Filterrohrs vordringen, nachdem er den hochtemperaturfesten porösen Metallmantelfilter durchströmt hat.

Weitere vorteilhafte Ausführungsformen ergeben sich aus den Patentansprüchen 10 bis 12.

Zur dauerhaften Gewährleistung einer sicheren Befestigung der Filterrohre an der Trägerplatte ist die Ausgestaltung gemäß Patentanspruch 13 vorteilhaft.

Gemäß Patentanspruch 14 ist es möglich, dass der Partikelfilter zusätzlich Katalysatorfunktion übernehmen kann.

Im Folgenden wird die Erfindung anhand von Ausführungsformen unter Bezugnahme auf die Zeichnung näher erläutert.

Es zeigen:
- Figur 1: eine Prinzipdarstellung einer Ausführungsform des erfindungsgemäßen Partikelfilters;
- Figur 2: eine erste Ausführungsform einer Filtereinheit des in Figur 1 gezeigten erfindungsgemäßen Partikelfilters;
- Figur 3: eine zweite Ausführungsform einer Filtereinheit des in Figur 1 gezeigten erfindungsgemäßen Partikelfilters;
- Figur 4 bis 7: Darstellungen eines Filterrohrs der in den Figuren 1 und 3 gezeigten Filtereinheit;
- Figur 8 bis 11: eine weitere Ausführungsform des Filterrohrs der in den Figuren 1 und 3 gezeigten Filtereinheit; und
- Figur 12 und 13: ein Bypassrohr der in den Figuren 1 und 2 gezeigten Filtereinheit.

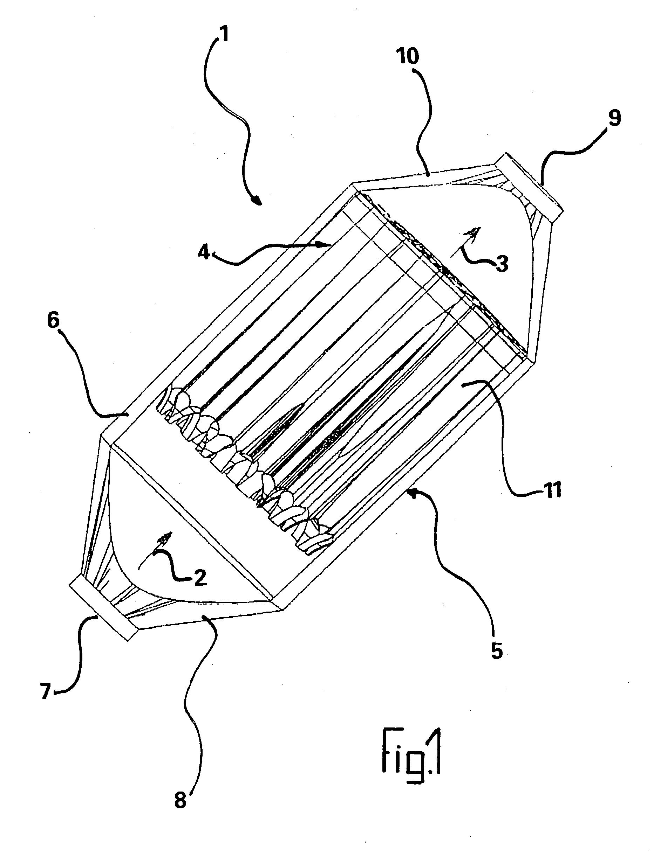

Eine in Figur 1 prinzipiell dargestellte Ausführungsform eines erfindungsgemäßen Partikelfilters wird an geeigneter Stelle in Abgasanlagen von mit Diesel- oder Otto-Motoren ausgerüsteten Kraftfahrzeugen integriert. Der Partikelfilter 1 dient dazu, einen Abgasstrom, der in der durch die Pfeile 2 und 3 gezeigten Strömungsrichtung den Partikelfilter 1 durchströmt, von Partikeln zu befreien, so dass an der Auslassseite der Abgasanlage ein möglichst partikelfreier Abgasstrom austritt.

Der Partikelfilter 1 hat eine Filtereinheit 4 und ein Gehäuse 5, welches die Filtereinheit 4 umgibt. Hierzu weist das Gehäuse einen im dargestellten Ausführungsbeispiel im Wesentlichen zylindrischen Gehäuseabschnitt 6 auf. An einer Einlassseite 7 des Partikelfilters 1 hat das Gehäuse 5 einen sich erweiternden Einlassabschnitt 8, der in den zylindrischen Gehäuseabschnitt 6, in dem die Filtereinheit 4 aufgenommen ist, übergeht. An einer Auslassseite 9 des Partikelfilters 1 hat das Gehäuse 5 einen Auslassabschnitt 10, in den der zylindrische Gehäuseabschnitt 6 übergeht. Der Einlassabschnitt 8 erweitert sich in Strömungsrichtung 2, 3 gesehen, wohingegen sich der Auslassabschnitt 10 in Strömungsrichtung 2, 3 verengt.

Das Gehäuse 5 des Partikelfilters 1 ist im gezeigten Ausführungsbeispiel aus dem Werkstoff 1.4512 hergestellt.

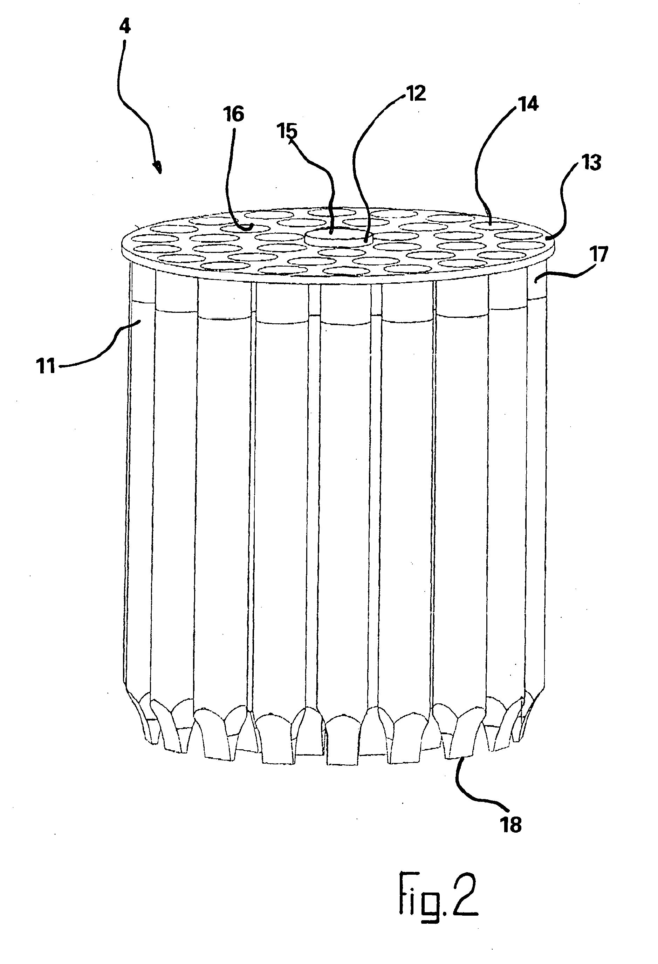

Eine in Figur 2 gezeigte erste Ausführungsform der Filtereinheit 4 des erfindungsgemäßen Partikelfilters 1 besteht aus einem im Wesentlichen zylindrischen Bündel von einzelnen, mit Abstand zueinander angeordneten Filterrohren 11 und einem mittig in diesem von den Filterrohren 11 gebildeten Rohrbündel angeordneten Bypassrohr 12.

Zu der Filtereinheit 4 gehört bei dem in Figur 2 gezeigten Ausführungsbeispiel eine Halterung in Form einer Trägerplatte 13, die im Bereich des der Auslassseite 9 des Partikelfilters 1 zugeordneten Stirnseiten 14 der Filterrohre bzw. der entsprechenden Stirnseite 15 des Bypassrohrs angeordnet ist.

Die Trägerplatte 13 ist mit Halteöffnungen 16 versehen, von denen jeweils eine jeweils einem Filterrohr 11 bzw. dem Bypassrohr 12 zugeordnet ist. Die Anordnung der Halteöffnungen 16 in der Trägerplatte 13 ist so gewählt, dass die Filterrohre 11 und das Bypassrohr 12 in dem durch sie gebildeten Rohrbündel jeweils einen Abstand zueinander aufweisen. Eine Anlage der Filterrohre 11 bzw. des Bypassrohrs 12 aneinander ist nicht vorgesehen.

Auch die Trägerplatte 13 ist im gezeigten Ausführungsbeispiel aus dem Werkstoff 1.4512 hergestellt.

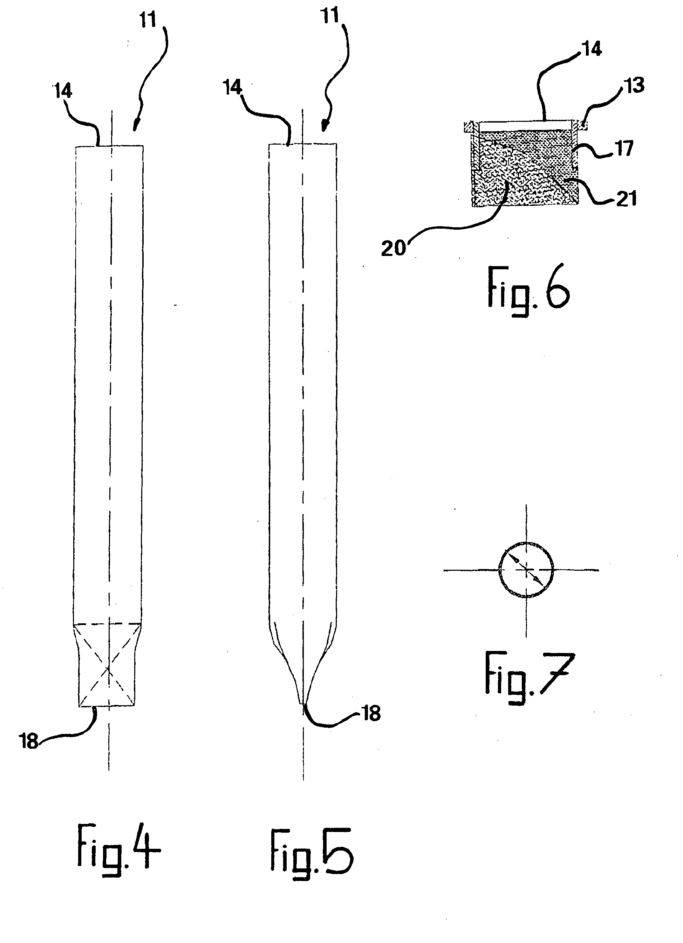

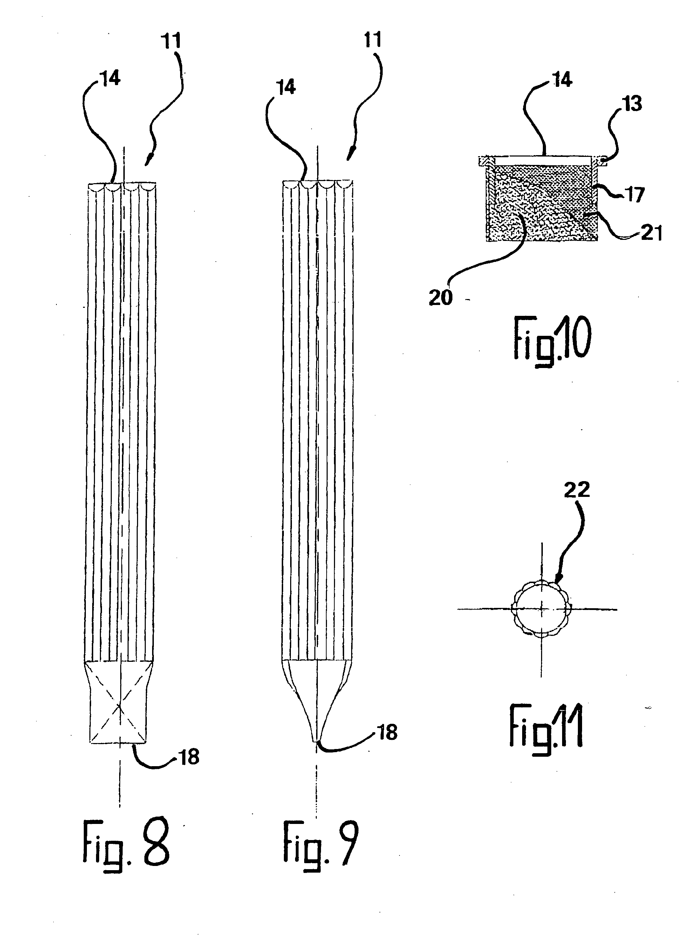

Wie sich am besten aus den Figuren 6 und 10 ergibt, weisen die Filterrohre 11 an ihren der Trägerplatte 13 zugeordneten Stirnenden Führungshülsen 17 auf, mittels denen sie an der Trägerplatte 13 befestigt sind. Zur Befestigung kann vorteilhaft eine TIG-Verschweißung verwendet werden.

Die Trägerplatte 13 ist an ihrer Umfangsfläche abdichtend mit der Innenwand des zylindrischen Gehäuseabschnitts 6 des Gehäuses 5 verbunden. Die Filterrohre 11 und das Bypassrohr 12 sind an ihren der Auslassseite 9 des Partikelfilters 1 zugeordneten Stirnseiten 14, 15 offen, d.h., der Abgasstrom kann durch die offenen Stirnseiten 14, 15 der Filterrohre 11 und des Bypassrohrs 12 in den Auslassabschnitt 10 des Gehäuses 5 eintreten.

An ihren der Einlassseite 7 des Partikelfilters 1 bzw. der Filtereinheit 4 zugeordneten Stirnseiten 18 bzw. 19 sind die Filterrohre 11 bzw. das Bypassrohr 12 geschlossen ausgebildet, d.h., der den Partikelfilter 1 durchströmende Abgasstrom kann an diesen Stirnseiten 18, 19 der Filterrohre 11 bzw. des Bypassrohrs 12 nicht in den Innenraum der Filterrohre 11 bzw. des Bypassrohrs 12 eintreten, sondern er wird in den Zwischenraum zwischen den Außenseiten der Filterrohre 11 bzw. des Bypassrohrs 12 eingeleitet. Die geschlossenen Stirnseiten 18, 19 sind so ausgebildet, dass sich der Strömungsquerschnitt für den die Filtereinheit 4 bzw. den Partikelfilter 1 durchströmenden Abgasstrom im Bereich der entsprechenden Endabschnitte der Filterrohre 11 bzw. des Bypassrohrs 12 allmählich reduziert, bis er dann in demjenigen Bereich der Filtereinheit 4, in dem die Außenmantelflächen der Filterrohre 11 und des Bypassrohrs 12 einander mit Abstand gegenüber liegen, wieder konstant ist.

Ein in den Figuren 4 bis 7 gezeigtes Ausführungsbeispiel des Filterrohrs 11 hat, wie sich insbesondere aus Figur 7 ergibt, einen kreisförmigen Querschnitt und eine im Wesentlichen glattzylindrische Außenmantelfläche. Das Filterrohr 11 besteht aus einem äußeren hochtemperaturfesten porösen Metallmantelfilter 20, wie dies am Besten aus der Prinzipdarstellung in Figur 6 hervorgeht. Dieser hochtemperaturfeste poröse Metallmantelfilter 20 ist auf einen zylindrischen Filterträger 21 aufgebracht, und zwar vorzugsweise aufgeschweißt.

Der zylindrische Filterträger 21 ist als durchbrochenes Metallgestreck ausgebildet. Das durchbrochene Metallgestreck des Filterträgers 21 hat eine Mantelfläche, die im dargestellten Ausführungsbeispiel zu ca. 20 % aus dem durchbrochenen Metallgestreck gebildet wird, wobei die Durchbrechungen ca. 80 % der Mantelfläche des Filterträgers 21 ausmachen. Das durchbrochene Metallgestreck des Filterträgers kann aus dem Werkstoff 1.4845 oder dem Werkstoff AISI310S ausgebildet sein.

Der auf das durchbrochene Metallgestreck des Filterträgers 21 aufgeschweißte hochtemperaturfeste poröse Metallmantelfilter 20 ist aus einem Sintermetall, vorzugsweise aus dem Werkstoff FeCrAl bzw. 1.4767FeCrAl, ausgebildet.

Wie sich insbesondere aus den Figuren 4 und 5 ergibt, ist der der einlassseitigen Stirnseite 18 des Filterrohrs 11 zugeordnete Endabschnitt desselben im Wesentlichen keilförmig ausgestaltet.

Eine in den Figuren 8 bis 11 gezeigte Ausführungsform des Filterrohrs 11 unterscheidet sich von der vorstehend beschriebenen dadurch, dass die Außenmantelfläche 22 des Filterrohrs 11 gewellt gestaltet ist. Hierdurch ergibt sich an der durch den porösen hochtemperaturfesten Metallmantelfilter 20 gebildeten Außenmantelfläche 22 des Filterrohrs 11 eine im Vergleich zu der anhand der Figuren 4 bis 7 gezeigten Ausführungsform vergrößerte Oberfläche.

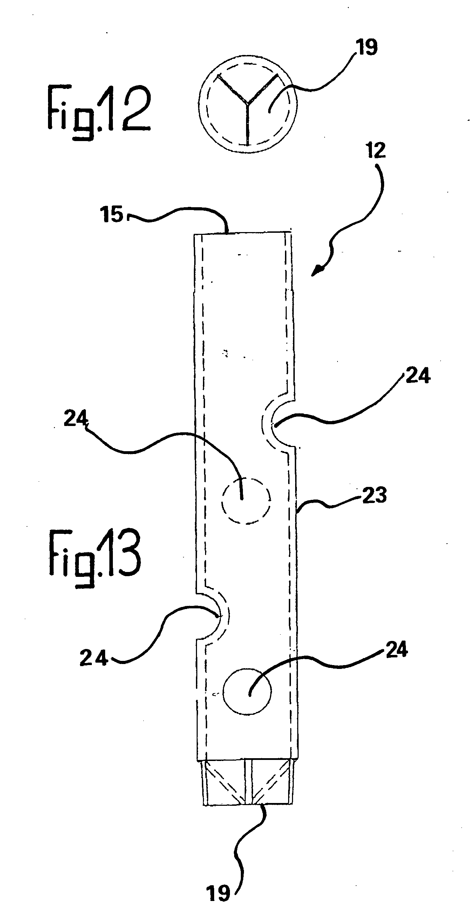

Eine in den Figuren 12 und 13 gezeigte Ausführungsform des Bypassrohrs 12 ist an der Mantelfläche 23 mit Durchlassöffnungen 24 versehen, die in Axialrichtung des Bypassrohrs 12 zueinander beabstandet sind und die in Umfangsrichtung des Bypassrohrs 12 um jeweils 90 Grad zueinander versetzt sind. Die Funktion des Bypassrohrs 12 im Falle der in Figur 2 gezeigten Ausführungsform der Filtereinheit 4 ist, im Falle von Überlastungen bzw. Verstopfungen der Filterrohre 11 der Filtereinheit 4 quasi als Bypassventil zu dienen, so dass die Abgasanlage des Kraftfahrzeugs weiter betrieben werden kann.

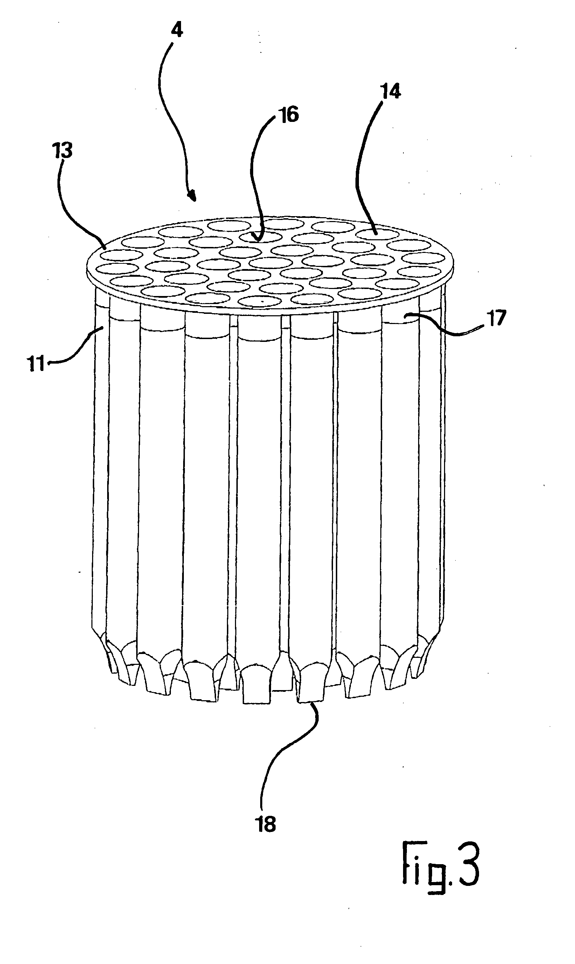

Eine in Figur 3 gezeigte Ausführungsform der Filtereinheit 4 des erfindungsgemäßen Partikelfilters 1 unterscheidet sich von der in Figur 2 dargestellten Ausführungsform dadurch, dass ein Bypassrohr 12 nicht mehr vorgesehen ist. Anstelle des Bypassrohrs 12 weist die in Figur 3 gezeigte Ausführungsform der Filtereinheit 4 ein weiteres bzw. weitere Filterrohre 11 auf. Für Abgasanlagen modernerer Brennkraftmaschinen hat sich erwiesen, dass trotz des Verzichts auf ein Bypassrohr mit Bypassventilfunktion ein dauerhafter und zuverlässiger Betrieb der Filtereinheit 4 gesichert werden kann, wobei die Filterwirkung der Filtereinheit 4 des Partikelfilters 1 aufgrund der geschlossenen Ausgestaltung derselben verbessert ist.

Darüber hinaus ist es möglich, die hochtemperaturfesten porösen Metallmantelfilter 20 der Filterrohre 11 mit einer Platin- und/oder Rhodium- und/oder Palladiumbeschichtung zu versehen, so dass der Partikelfilter 1 außer seiner Filterfunktion auch eine Katalysatorfunktion übernehmen kann.

Der Abgasstrom tritt durch die Einlassseite 7 des Partikelfilters 1 in diesen ein und wird im Bereich der einlassseitigen Stirnseiten 18 der Filterrohre 11, die dort geschlossen ausgebildet sind, in die Zwischenräume zwischen den Filterrohren 11 geführt. Um in den Innenraum der Filterrohre 11 zu gelangen, muss das Abgas den Metallmantelfilter 20 jedes Filterrohrs 11 durchdringen, in dem etwaige im Abgas befindliche Partikel verbleiben. Aufgrund der dort herrschenden Temperaturen findet kontinuierlich eine Verbrennung dieser aus dem Abgasstrom herausgefilterten Partikel statt. Nachdem das Abgas den Metallmantelfilter 20 durchströmt hat und partikelfrei ist, tritt es durch den Filterträger 21 in den Innenraum des Filterrohrs 11 ein und gelangt durch die offene Stirnseite des Filterrohrs 11 zum Auslassabschnitt 10 des Partikelfilters 1. Dort sind ihm jedwede Partikel weitestgehend entzogen.

Im Betrieb moderner Brennkraftmaschinen treten Zusetzungen der Filterrohre 11 der Filtereinheit 4 des Partikelfilters 1 nicht mehr auf.

Für Brennkraftmaschinen, bei denen betriebsbedingt derartige Zusetzungen der Filtereinheit 4 nicht völlig ausgeschlossen werden können, ist das als Bypassventil fungierende Bypassrohr 12 vorgesehen, welches im Falle der in Figur 2 gezeigten Filtereinheit 4 etwa mittig des Rohrbündels angeordnet ist. Bei Zusetzungen der Filtereinheit 4 bzw. deren Filterrohre 11 kann der Abgasstrom durch die Durchtrittsöffnungen 24 auf der Mantelfläche 23 des Bypassrohrs 12 zur Auslassseite 9 des Partikelfilters 1 gelangen.

## Patentansprüche

1. Partikelfilter für Diesel- und Otto-Motoren, mit einer Filtereinheit (4) und einem Gehäuse (5), in dem die Filtereinheit (4) aufgenommen ist, wobei die Filtereinheit (4) eine Vielzahl metallischer Filterrohre (11) aufweist, die parallel zueinander angeordnet, an ihrer der Einlassseite (7) des Partikelfilters (1) zugeordneten Stirnseite (18) geschlossen und an ihrer der Auslassseite (9) des Partikelfilters (1) zugeordneten Stirnseite (14) offen sind, **dadurch gekennzeichnet, dass** die Filterrohre (11) der Filtereinheit (4) an ihren der Einlassseite (7) des Partikelfilters (1) zugeordneten Stirnseiten (18) so geformt sind, dass sich ein Strömungsquerschnitt des Partikelfilters (1) in Richtung (2, 3) eines ihn durchströmenden Abgasstroms allmählich verkleinert.

2. Partikelfilter nach Anspruch 1, mit einem metallischen Bypassrohr (12), das parallel zu den Filterrohren (11) angeordnet, an seiner der Einlassseite (7) des Partikelfilters (1) zugeordneten Stirnseite (19) geschlossen, an seiner der Auslassseite (9) des Partikelfilters (1) zugeordneten Stirnseite (15) offen und an seiner Mantelfläche (13) mit in Axialrichtung zueinander beabstandeten Durchlassöffnungen (24) ausgestaltet ist.

3. Partikelfilter nach Anspruch 1 oder 2, bei dem die Filterrohre (11) zylindrisch ausgebildet sind.

4. Partikelfilter nach einem der Ansprüche 1 bis 3, bei dem die Filterrohre (11) eine gewellte Außenmantelfläche (22) aufweisen.

5. Partikelfilter nach einem der Ansprüche 1 bis 4, dessen Filtereinheit (4) eine Halterung (13) für die Filterrohre (11) und ggf. das Bypassrohr (12) aufweist, die als Trägerplatte (13) mit Halteöffnungen (16) ausgebildet ist, deren Durchmesser dem Durchmesser der Rohre (11, 12) entspricht.

6. Partikelfilter nach einem der Ansprüche 2 bis 5, bei dem das Bypassrohr (12) der Filtereinheit (4) an seiner der Einlassseite (7) des Partikelfilters (1) zugeordneten geschlossenen Stirnseite (19) so geformt sind, dass sich ein Strömungsquerschnitt des Partikelfilters (1) in Richtung (2, 3) eines ihn durchströmenden Abgasstroms allmählich verkleinert.

7. Partikelfilter nach Anspruch 5 oder 6, bei dem die Trägerplatte (13) an der Auslassseite (9) der Filtereinheit (4) bzw. des Partikelfilters (1) angeordnet ist.

8. Partikelfilter nach einem der Ansprüche 5 bis 7, bei dem die Trägerplatte (13) kreisförmig, elliptisch oder mehreckig ausgebildet ist und entsprechend ein aus den Filterrohren (11) gebildetes Bündel einen etwa kreisförmigen, elliptischen oder mehreckigen Querschnitt aufweist.

9. Partikelfilter nach einem der Ansprüche 1 bis 8, bei dem jedes Filterrohr (11) einen hochtemperaturfesten porösen Metallmantelfilter (20) und einen zylindrischen, als durchbrochenes Metallgestreck ausgebildeten Filterträger (21) aus einem Edelstahlwerkstoff aufweist, wobei der Metallmantelfilter (20) auf den Filterträger (21) aufgeschweißt ist.

10. Partikelfilter nach Anspruch 9, bei dem das durchbrochene Metallgestreck des Filterträgers (21) ca. 20 % und die Durchbrechungen ca. 80 % der Mantelfläche des Filterträgers (21) ausmachen.

11. Partikelfilter nach Anspruch 9 oder 10, bei dem der hochtemperaturfeste poröse Metallmantelfilter (20) aus Sintermetall, vorzugsweise aus dem Werkstoff FeCrAl bzw. 1.4767FeCrAl, ausgebildet ist.

12. Partikelfilter nach einem der Ansprüche 9 bis 11, bei dem der Filterträger (21) aus dem Werkstoff AISI310S oder 1.4845 ausgebildet ist.

13. Partikelfilter nach einem der Ansprüche 5 bis 12, bei dem jedes Filterrohr (11) im Bereich der Trägerplatte (13) eine Führungshülse (17) aufweist, die vorzugsweise aus dem Werkstoff 1.4301 ausgebildet ist.

14. Partikelfilter nach einem der Ansprüche 9 bis 13, bei dem die hochtemperaturfesten porösen Metallmantelfilter (20) mit einer Platin- und/oder Rhodium- und/oder Palladiumbeschichtung versehen sind.

## Claims

1. A particle filter for diesel and petrol engines, having a filter unit (4) and a housing (5), in which the filter unit (4) is accommodated, the filter unit (4) having a multiplicity of metallic filter tubes (11), which are arranged parallel to each other, are closed on their end face (18) assigned to the inlet side (7) of the particle filter (1) and are open on their end face (14) assigned to the outlet side (9) of the particle filter (1),
**characterised in that**
the filter tubes (11) of the filter unit (4) are shaped on their end faces (18) assigned to the inlet side (7) of the particle filter (1) in such a manner that a flow cross section of the particle filter (1) is gradually reduced in the direction (2, 3) of an exhaust gas stream flowing through said particle filter.

2. The particle filter according to Claim 1, having a metallic bypass tube (12), which is arranged parallel to the filter tubes (11), is closed on its end face (19) assigned to the inlet side (7) of the particle filter (1), is open on its end face (15) assigned to the outlet side (9) of the particle filter (1) and is formed with through-openings (24) on its lateral face (13), which are spaced apart from each other in the axial direction.

3. The particle filter according to Claim 1 or 2, in which the filter tubes (11) are cylindrical.

4. The particle filter according to any one of Claims 1 to 3, in which the filter tubes (11) have a corrugated outer lateral face (22).

5. The particle filter according to any one of Claims 1 to 4, the filter unit (4) of which has a retainer (13) for the filter tubes (11) and where appropriate has the bypass tube (12), said retainer being formed as a carrier plate (13) with retaining openings (16), the diameter of which corresponds to the diameter of the tubes (11, 12).

6. The particle filter according to any one of Claims 2 to 5, in which the bypass tube (12) of the filter unit (4) is shaped on its closed end face (19) assigned to the inlet side (7) of the particle filter (1) in such a manner that a flow cross section of the particle filter (1) is gradually reduced in the direction (2, 3) of an exhaust gas stream flowing through said particle filter.

7. The particle filter according to Claim 5 or 6, in which the carrier plate (13) is arranged on the outlet side (9) of the filter unit (4) or of the particle filter (1).

8. The particle filter according to any one of Claims 5 to 7, in which the carrier plate (13) is circular, elliptical or polygonal and accordingly a bundle formed from the filter tubes (11) has an approximately circular, elliptical or polygonal cross section.

9. The particle filter according to any one of Claims 1 to 8, in which each filter tube (11) has a high-temperature-resistant, porous metal jacket filter (20) and a cylindrical filter carrier (21), which is formed as a perforated metal knitted portion consisting of a stainless steel material, wherein the metal jacket filter (20) is welded onto the filter carrier (21).

10. The particle filter according to Claim 9, in which the perforated metal knitted portion of the filter carrier (21) accounts for approx. 20% and the holes account for approx. 80% of the lateral face of the filter carrier (21).

11. The particle filter according to Claim 9 or 10, in which the high-temperature-resistant, porous metal jacket filter (20) is formed from sintered metal, preferably from the material FeCrAl or 1.4767FeCrAl.

12. The particle filter according to any one of Claims 9 to 11, in which the filter carrier (21) is formed from the material AISI310S or 1.4845.

13. The particle filter according to any one of Claims 5 to 12, in which each filter tube (11) has a guide sleeve (17), which is preferably formed from the material 1.4301, in the region of the carrier plate (13).

14. The particle filter according to any one of Claims 9 to 13, in which the high-temperature-resistant, porous metal jacket filters (20) are provided with a platinum and/or rhodium and/or palladium coating.

## Revendications

1. Filtre à particules pour moteurs Diesel et à essence avec une unité de filtre (4) et un boîtier (5) dans lequel l'unité de filtre est logée, dans lequel l'unité de filtre comporte une pluralité de conduits de filtre (11) métalliques, qui sont disposés parallèles les uns aux autres, sont fermés sur leur face avant (18) affectée au côté d'admission (7) du filtre à particules (1) et sont ouverts sur leur face avant (14) affectée au côté échappement (9) du filtre à particules (1), **caractérisé en ce que** les conduits de filtre (11) de l'unité de filtre (4) sont formés sur leurs faces avant affectées au côté d'admission (7) du filtre à particules (1) de telle sorte qu'une section transversale d'écoulement du filtre à particules (1) se réduit progressivement dans le sens (2, 3) d'un flux de gaz d'échappement le traversant.

2. Filtre à particules selon la revendication 1 avec un conduit de dérivation (12) métallique qui est disposé parallèlement aux conduits de filtre (11), est fermé sur sa face avant (19) affectée à son côté d'admission (7) du filtre à particules (1), est ouvert sur sa face avant (15) affectée à son côté d'échappement (9) du filtre à particules (1) et est constitué sur sa surface d'enveloppe (13) avec des ouvertures de passage (24) distantes les unes des autres dans le sens axial.

3. Filtre à particules selon la revendication 1 ou 2 pour lequel les conduits de filtre (11) sont constitués de forme cylindrique.

4. Filtre à particules selon l'une quelconque des revendications 1 à 3 pour lequel les conduits de filtre (11) comportent une surface d'enveloppe extérieure (22) ondulée.

5. Filtre à particules selon l'une quelconque des revendications 1 à 4 dont l'unité de filtre (4) comporte une fixation (13) pour les conduits de filtre (11) et le cas échéant le conduit de dérivation (12), qui est constituée comme une plaque de support (13) avec des ouvertures de fixation (16), dont le diamètre correspond au diamètre des conduits (11, 12).

6. Filtre à particules selon l'une quelconque des revendications 1 à 5 pour lequel le conduit de dérivation (12) de l'unité de filtre (4) est formé sur sa face avant (19) fermée affectée au côté admission (7) du filtre à particules (1) de telle sorte qu'une section transversale d'écoulement du filtre à particules (1) se réduit progressivement dans le sens (2, 3) d'un flux de gaz d'échappement le traversant.

7. Filtre à particules selon la revendication 5 ou 6 pour lequel la plaque de support (13) est disposée sur le côté échappement (9) de l'unité de filtre (4) ou du filtre à particules (1).

8. Filtre à particules selon l'une quelconque des revendications 5 à 7 pour lequel la plaque de support (13) est constituée de forme circulaire, elliptique ou polygonale et un faisceau formé des conduits de filtre (11) comporte en conséquence une section transversale à peu près de forme circulaire, elliptique ou polygonale.

9. Filtre à particules selon l'une quelconque des revendications 1 à 8 pour lequel chaque conduit de filtre (11) comporte un filtre à enveloppe métallique (20) poreux résistant à haute température et un porte-filtre (21) cylindrique en acier spécial constitué comme un allongement métallique percé, le filtre à enveloppe métallique (20) étant soudé sur le porte-filtre (21).

10. Filtre à particules selon la revendication 9 pour lequel l'allongement métallique percé du porte-filtre (21) représente environ 20 % et les percées environ 80% de la surface d'enveloppe du porte-filtre (21).

11. Filtre à particules selon la revendication 9 ou 10 pour lequel le filtre à enveloppe métallique (20) poreux résistant à haute température est constitué en métal fritté, de préférence dans un matériau FeCrAl ou 1.4767FeCrAl.

12. Filtre à particules selon l'une quelconque des revendications 9 à 11 pour lequel le porte-filtre (21) est constitué du matériau AISI310S ou 1.4845.

13. Filtre à particules selon l'une quelconque des revendications 5 à 12 pour lequel chaque conduit de filtre (11) comporte dans la zone de la plaque de support (13) un manchon de guidage (17) qui est constitué de préférence du matériau 1.4301.

14. Filtre à particules selon l'une quelconque des revendications 9 à 13 pour lequel les filtres à enveloppe métallique (20) poreux résistants à haute température sont munis d'un revêtement en platine et/ou rhodium et/ou palladium.
